# EUROPÄISCHE PATENTSCHRIFT

(11) **EP 3 727 958 B1**
(45) Veröffentlichungstag und Bekanntmachung des Hinweises auf die Patenterteilung: **11.01.2023**
(21) Anmeldenummer: 18786734.6
(22) Anmeldetag: 11.10.2018
(51) Int. Cl.: B60S 1/38, B60S 1/40, B60S 1/52

(54) **WISCHBLATTVORRICHTUNG**
WIPER BLADE DEVICE
DISPOSITIF FORMANT BALAI D'ESSUIE-GLACE

(30) Priorität: 21.12.2017 DE 102017223518
(43) Veröffentlichungstag der Anmeldung: 28.10.2020
(73) Patentinhaber: Robert Bosch GmbH, 70442 Stuttgart (DE)
(72) Erfinder: KRAEMER, Godelieve, 76549 Huegelsheim (DE)
(86) Internationale Anmeldenummer: PCT/EP2018/077694
(87) Internationale Veröffentlichungsnummer: WO 2019/120670

(56) Entgegenhaltungen:
- EP-A2- 2 505 440
- DE-A1-102007 062 304
- DE-A1-102010 025 687
- DE-A1-102013 103 279
- DE-A1-102014 009 721
- US-A1- 2011 185 531

## Beschreibung

### Stand der Technik

In der EP 2 505 440 A2 ist bereits eine Wischblattvorrichtung, insbesondere Scheibenwischer-Wischblattvorrichtung, mit zumindest einem Wischblatt, mit zumindest einer Adaptereinheit zu einer Kopplung des Wischblatts mit einem Wischarm eines Wischers, insbesondere Scheibenwischers, mit zumindest einer in dem Wischblatt integrierten Sprüheinheit, und mit zumindest einer Waschwasserverteilereinheit zu einer Zuführung von Waschwasser zu der Sprüheinheit, insbesondere zu zumindest im Wesentlichen parallel zu einer Haupterstreckungsrichtung des Wischblatts entlang des Wischblatts angeordneten Düsenelementen der Sprüheinheit, wobei die Waschwasserverteilereinheit zumindest ein Kanalkupplungselement zu einer, insbesondere für eine Durchleitung eines Fluids vorgesehenen, vorzugsweise fluiddichten, Kupplung zumindest eines Teils der Waschwasserverteilereinheit mit einem Waschwasserkanal der Sprüheinheit aufweist, und wobei die Waschwasserverteilereinheit zumindest ein Adapterkupplungselement zu einer, insbesondere für eine Durchleitung eines Fluids vorgesehenen, vorzugsweise fluiddichten, Kupplung zumindest eines weiteren Teils der Waschwasserverteilereinheit mit einem weiteren Waschwasserkanal der Adaptereinheit aufweist, vorgeschlagen worden.

### Offenbarung der Erfindung

Die Erfindung geht aus von einer Wischblattvorrichtung, insbesondere Scheibenwischer-Wischblattvorrichtung, mit zumindest einem Wischblatt, mit zumindest einer Adaptereinheit zu einer Kopplung des Wischblatts mit einem Wischarm eines Wischers, insbesondere Scheibenwischers, mit zumindest einer in dem Wischblatt integrierten Sprüheinheit, und mit zumindest einer Waschwasserverteilereinheit zu einer Zuführung von Waschwasser zu der Sprüheinheit, insbesondere zu zumindest im Wesentlichen parallel zu einer Haupterstreckungsrichtung des Wischblatts entlang des Wischblatts angeordneten Düsenelementen der Sprüheinheit, wobei die Waschwasserverteilereinheit zumindest ein Kanalkupplungselement zu einer, insbesondere für eine Durchleitung eines Fluids vorgesehenen, vorzugsweise fluiddichten, Kupplung zumindest eines Teils der Waschwasserverteilereinheit mit einem Waschwasserkanal der Sprüheinheit aufweist, und wobei die Waschwasserverteilereinheit zumindest ein Adapterkupplungselement zu einer, insbesondere für eine Durchleitung eines Fluids vorgesehenen, vorzugsweise fluiddichten, Kupplung zumindest eines weiteren Teils der Waschwasserverteilereinheit mit einem weiteren Waschwasserkanal der Adaptereinheit aufweist.

Es wird vorgeschlagen, dass der weitere Waschwasserkanal zumindest teilweise durch die Adaptereinheit ausgebildet ist. Durch die erfindungsgemäße Ausgestaltung der Wischblattvorrichtung kann vorteilhaft eine Wischblattvorrichtung mit vorteilhaften Reinigungseigenschaften erreicht werden. Insbesondere kann eine vorteilhafte Zuleitung und/oder Verteilung von Waschwasser, insbesondere zu einer Sprüheinheit eines Wischblatts, ermöglicht werden, wodurch eine besonders effektive Reinigung einer durch das Wischblatt bearbeiteten Scheibe ermöglicht werden kann. Zudem kann durch die erfindungsgemäße Ausgestaltung der Wischblattvorrichtung vorteilhaft eine hohe Dichtheit der Waschwasserverteilereinheit erreicht werden. Außerdem kann vorteilhaft eine Montage, insbesondere eines Wischblatts mit einer Sprüheinheit, erleichtert werden, insbesondere indem zumindest ein Waschwasserkanal, vorzugsweise ein Großteil aller Waschwasserkanäle schlauchfrei ausgebildet sind. Zudem kann, insbesondere durch eine, insbesondere einstückige, Ausbildung eines weiteren Waschwasserkanals als fester Teil der Adaptereinheit, vorteilhaft eine Komplexität reduziert werden, insbesondere durch eine Reduzierung einer gesamten Teileanzahl, wodurch insbesondere Produktions- und/oder Montagekosten gesenkt werden können.

Unter einer "Wischblattvorrichtung" soll insbesondere zumindest ein Teil, insbesondere eine Unterbaugruppe, eines Wischblatts verstanden werden, wobei insbesondere zusätzlich auch Zubehöreinheiten für das Wischblatt umfasst sein können, wie beispielsweise eine Sprüheinheit, zumindest ein Waschwasserkanal, zumindest ein Teil einer Waschwasserverteilereinheit und/oder zumindest ein Teil einer Adaptereinheit. Insbesondere kann die Wischblattvorrichtung auch das gesamte Wischblatt, insbesondere mit der Adaptereinheit, umfassen. Unter der "Adaptereinheit" soll insbesondere eine Einheit verstanden werden, welche dazu vorgesehen ist, eine Kopplung des Wischblatts mit zumindest einem Wischarm herzustellen. Erfindungsgemäß umfasst die Adaptereinheit zumindest einen Wischarmadapter. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Wischarmadapter" soll in diesem Zusammenhang insbesondere ein Adapter verstanden werden, der eine Montagestelle zu einer Montage eines Wischarms mit der Adaptereinheit bereitstellt. Insbesondere weist der Wischarmadapter zumindest eine Wischarmaufnahme zu einer zumindest teilweisen Aufnahme zumindest eines Teils des Wischarms auf. Insbesondere ist eine mittels des Wischarmadapters hergestellte Verbindung zwischen dem Wischarm und der Adaptereinheit lösbar. Es ist beispielsweise denkbar, dass die Adaptereinheit ein Betätigungselement, beispielsweise einen Knopf aufweist, mittels welchem eine Verbindung des Wischarmadapters zerstörungsfrei gelöst werden kann. Der Wischarmadapter ist insbesondere nicht zerstörungsfrei von der Adaptereinheit lösbar. Zudem kann die Adaptereinheit insbesondere einen Wischblattadapter aufweisen. Unter einem "Wischblattadapter" soll in diesem Zusammenhang insbesondere ein Adapter verstanden werden, der einen Kontaktbereich zu einem Wischblattbauteil aufweist und mit dem Wischblattbauteil unverlierbar verbunden ist. Vorzugsweise ist das Wischblatt fest, bevorzugt nicht zerstörungsfrei lösbar, mit dem Wischblattadapter verbunden. Dadurch kann vorteilhaft eine einfache Montage von Wischblatt und Wischarm ermöglicht werden. Insbesondere sind der Wischblattadapter und der Wischarmadapter in der Adaptereinheit mittels einer Haltefeder verbunden.

Insbesondere sind der Wischblattadapter und der Wischarmadapter gegeneinander beweglich, insbesondere zumindest teilweise rotierbar, gelagert. Vorzugsweise ist mittels der Adaptereinheit das Wischblatt zumindest teilweise rotierbar gegenüber dem Wischarm gelagert. Unter "zumindest teilweise rotierbar" soll insbesondere um einen maximalen Rotationswinkel von zumindest 5°, vorzugsweise von zumindest 10°, vorteilhaft von zumindest 12°, bevorzugt von zumindest 15° und besonders bevorzugt von höchstens 20° rotierbar verstanden werden. Insbesondere ist das Wischblatt gegenüber einer Ruheposition im Uhrzeigersinn und/oder gegen den Uhrzeigersinn rotierbar, wobei vorzugsweise eine der Rotationsrichtungen eine größere, insbesondere zumindest viermal, vorzugsweise zumindest fünfmal, bevorzugt zumindest sechsmal und besonders bevorzugt zumindest siebenmal größere Rotationsfreiheit aufweist, d.h. dass der maximal mögliche Rotationswinkel in eine der Rotationsrichtungen entsprechend größer ist. Insbesondere ist das Wischblatt um eine Rotationsachse rotierbar, welche senkrecht zu einer Haupterstreckungsrichtung des Wischblatts und parallel zu einer Wischebene des Wischblatts verläuft. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Unter einer "Wischebene" soll insbesondere eine Ebene verstanden werden, welche in einem Wischbetrieb des Wischers von einer Unterseite des Wischblatts, insbesondere einer Wischlippe, überstrichen wird. Insbesondere ist die Rotation des Wischblatts gegenüber dem Wischarm in zumindest einer Rotationsrichtung durch einen Anschlag, welcher insbesondere an der Haltefeder, an dem Wischarmadapter und/oder an dem Wischblattadapter angeordnet ist, begrenzt. Insbesondere ist die Haltefeder zu einer Rückauslenkung eines ausgelenkten Wischblatts in eine Ausgangs- und/oder Ruheposition vorgesehen.

Unter einer "Sprüheinheit" soll in diesem Zusammenhang insbesondere eine Einheit verstanden werden, die zumindest ein Düsenelement umfasst. Bevorzugt umfasst die Sprüheinheit zumindest zwei Düsenelemente, welche insbesondere in einer Reihe angeordnet sind. Besonders bevorzugt sind die Düsenelemente seitlich an einer oder an beiden langen Seite/n einer Wischleiste des Wischblatts angeordnet. Unter einem "Düsenelement" soll in diesem Zusammenhang insbesondere ein Element verstanden werden, das dazu vorgesehen ist, Waschwasser, insbesondere auf eine Scheibe, auszubringen, beziehungsweise in eine bestimmte Richtung zu sprühen. Insbesondere weist das Düsenelement zumindest eine Düsenöffnung auf, die ein Waschwassersystem zu einer Umgebung hin öffnet. Das Düsenelement kann aus einem Metall und/oder besonders vorteilhaft aus einem Kunststoff hergestellt sein. Bevorzugt ist das Düsenelement dazu vorgesehen, mit einem Waschwasserkanal der Sprüheinheit gekoppelt zu werden. Darunter, dass die Sprüheinheit "in dem Wischblatt integriert ist" soll insbesondere verstanden werden, dass die Bauteile der Sprüheinheit, insbesondere die Düsenelemente, unlösbar mit dem Wischblatt verbunden sind, insbesondere nicht zerstörungsfrei von dem Wischblatt trennbar sind. Insbesondere sind die Düsenelemente als, insbesondere entlang dem Wischblatt zumindest abschnittsweise gleichmäßig und/oder ungleichmäßig verteilt angeordnete Öffnungen ausgebildet, welche insbesondere zumindest schräg in Richtung einer Wischebene des Wischblatts ausgerichtet sind. Alternativ oder zusätzlich ist vorstellbar, dass zumindest ein weiteres Düsenelement außerhalb des Wischblatts angeordnet ist, beispielsweise in der Adaptereinheit und/oder in einer Endkappe des Wischblatts.

Unter einer "Waschwasserverteilereinheit" soll insbesondere eine Einheit verstanden werden, welche der Wischblattvorrichtung zugeführtes Waschwasser zumindest teilweise durch Adaptereinheit und/oder Wischblatt zu der Sprüheinheit leitet. Insbesondere teilt die Waschwasserverteilereinheit das zugeführte Waschwasser so auf, dass bei einem Sprühbetrieb der Sprüheinheit an ausgewählten und/oder an allen Düsenelementen vergleichbare Waschwasserdrücke auftreten. Dadurch kann vorteilhaft eine gute und/oder gleichmäßige Reinigungsleistung erzielt werden. Insbesondere weist die Waschwasserverteilereinheit zumindest eine Waschwasserzuführung zu einem Anschluss einer externen Waschwasserquelle auf. Insbesondere weist die Waschwasserverteilereinheit zumindest eine, bevorzugt zumindest zwei, Waschwasserausleitungen auf, welche z.B. mit Waschwasserkanälen der Sprüheinheit verbunden sein können. Vorzugsweise sind zwei Waschwasserausleitungen zumindest im Wesentlichen in entgegengesetzte Richtungen parallel zu der Haupterstreckungsrichtung des Wischblatts ausgerichtet. Insbesondere sind Waschwasserzuleitungen und Waschwasserausleitungen zumindest im Wesentlichen parallel zueinander ausgerichtet, insbesondere in einer Projektion auf die Wischebene gesehen.

Unter einem "Kanalkupplungselement" soll insbesondere ein Element der Waschwasserverteilereinheit verstanden werden, welches zu einer waschwasserdichten, insbesondere kraft- und/oder formschlüssigen, Verbindung eines waschwasserführenden Waschwasserkanals der Sprüheinheit mit einem Teil der Waschwasserverteilereinheit vorgesehen ist. Insbesondere kann das Kanalkupplungselement dazu vorgesehen sein, eine, insbesondere zugfeste, Rohrkupplung auszubilden. Insbesondere kann das Kanalkupplungselement zumindest ein Formschlusselement umfassen, welches vorzugsweise als eine Kante ausgebildet ist, die dazu vorgesehen sein kann, zumindest teilweise in eine Vertiefung des Waschwasserkanals der Sprüheinheit einzugreifen. Unter "kraft- und/oder formschlüssig verbunden" soll dabei insbesondere eine lösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird. Das Kanalkupplungselement ist insbesondere aus einem zumindest im Wesentlichen formstabilen Material, beispielsweise einem Kunststoff und/oder einem Metall, ausgebildet. Der Waschwasserkanal der Sprüheinheit kann insbesondere zumindest teilweise als ein Schlauch und/oder zumindest teilweise als ein Hohlraum in dem Wischblatt ausgebildet sein.

Unter einem "Adapterkupplungselement" soll insbesondere ein Element der Waschwasserverteilereinheit verstanden werden, welches zu einer waschwasserdichten, insbesondere kraft- und/oder formschlüssigen, Verbindung eines waschwasserführenden weiteren Waschwasserkanals der Adaptereinheit mit einem Teil der Waschwasserverteilereinheit vorgesehen ist. Insbesondere kann das Adapterkupplungselement dazu vorgesehen sein, eine Rohrkupplung auszubilden. Insbesondere kann das Adapterkupplungselement mittels zumindest eines Formschlusselements kraft- und/oder formschlüssig mit der Adaptereinheit, insbesondere dem Wischarmadapter, vorzugsweise fluiddicht mit einer Ausnehmung in dem Wischarmadapter, verbunden sein. Vorzugsweise weist das Adapterkupplungselement an einer zur Kupplung mit der Adaptereinheit vorgesehenen Kupplungsstelle eine Dichtung, insbesondere eine Dichtkante, auf, mittels welcher das Adapterkupplungselement fluiddicht mit dem weiteren Waschwasserkanal der Adaptereinheit verbindbar ist. Alternativ oder zusätzlich kann die Dichtung auch einen Dichtring, beispielsweise einen O-Ring, und/oder eine weitere dem Fachmann geläufige Dichtung umfassen. Der weitere Waschwasserkanal der Adaptereinheit ist insbesondere als ein Hohlraum in der Adaptereinheit, insbesondere des Wischarmadapters, ausgebildet. Das Adapterkupplungselement ist insbesondere dazu vorgesehen, zumindest teilweise in den Hohlraum der Adaptereinheit, insbesondere des Wischarmadapters, einzugreifen. Vorzugsweise ist das mit der Adaptereinheit verbundene Adapterkupplungselement positionsfest relativ zu einem Teil der Adaptereinheit, insbesondere zu dem Wischarmadapter. Eine Position des Adapterkupplungselements ist insbesondere von einer Relativbewegung des Wischblatts gegenüber dem Wischarmadapter unbeeinflusst. Eine Außenform des Adapterkupplungselements ist insbesondere zumindest teilweise an eine Form des Hohlraums der Adaptereinheit, insbesondere des Wischarmadapters, angepasst und weist insbesondere einen zu einem Querschnitt des Hohlraums der Adaptereinheit, insbesondere des Wischarmadapters, komplementären Querschnitt auf. Der weitere Waschwasserkanal der Adaptereinheit weist insbesondere starre und/oder steife Wände auf. Der Wischarmadapter ist vorzugsweise als ein Spritzgussteil mit hohlraumartigen Kanälen zu einer Waschwasserführung, insbesondere dem weiteren Waschwasserkanal und einem Waschwasserzuleitungskanal, ausgebildet.

Darunter, dass der weitere Waschwasserkanal der Adaptereinheit "zumindest teilweise durch die Adaptereinheit ausgebildet ist" soll insbesondere verstanden werden, dass zumindest 60 %, vorzugsweise zumindest 80 %, bevorzugt zumindest 85 % und besonders bevorzugt zumindest 95 % der den weiteren Waschwasserkanal begrenzenden Elemente, insbesondere Wände, einstückig mit der Adaptereinheit, insbesondere mit dem Wischarmadapter der Adaptereinheit, ausgebildet sind. Der weitere Waschwasserkanal der Adaptereinheit ist insbesondere schlauchfrei ausgebildet. Dadurch kann vorteilhaft eine Notwendigkeit eines Ein- und/oder Ausfädelns und/oder eines Ein- und/oder Ausrenkens von waschwasserführenden Bauteilen bei einer Montage und/oder Demontage vermieden werden.

Ferner wird vorgeschlagen, dass die Adaptereinheit in einem montierten Zustand zumindest im Wesentlichen unverlierbar, insbesondere zumindest im Wesentlichen unlösbar, mit dem Wischblatt verbunden ist. Dadurch kann vorteilhaft eine Komplexität reduziert werden. Insbesondere kann eine Montage und/oder ein Austausch eines Wischblatts an einem Wischarm erleichtert werden. Dadurch können vorteilhaft Kosten, insbesondere für einen Endkunden, welcher einen Wischblattwechsel vornehmen lässt, reduziert werden. Unter "zumindest im Wesentlichen unlösbar" soll hier insbesondere eine Verbindung von zumindest zwei Elementen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmittel usw., voneinander trennbar sind. Insbesondere sind unlösbare Elemente nicht zerstörungsfrei voneinander trennbar. Insbesondere ist der Wischblattadapter zumindest im Wesentlichen unverlierbar, insbesondere zumindest im Wesentlichen unlösbar, mit dem Wischblatt verbunden. Insbesondere ist der Wischblattadapter zumindest im Wesentlichen unverlierbar, insbesondere zumindest im Wesentlichen unlösbar, mit dem Wischarmadapter und/oder mit der Haltefeder verbunden. Insbesondere ist der Wischarmadapter zerstörungsfrei lösbar mit dem Wischarm verbindbar.

Zudem wird vorgeschlagen, dass die Waschwasserverteilereinheit einen einstückig mit der Adaptereinheit, insbesondere dem Wischarmadapter der Adaptereinheit, ausgebildeten Waschwasserzuleitungskanal aufweist, welcher gewinkelt, insbesondere zumindest im Wesentlichen senkrecht, zu dem weiteren Waschwasserkanal der Adaptereinheit angeordnet ist. Dadurch kann vorteilhaft eine Wischblattvorrichtung mit vorteilhaften Reinigungseigenschaften erreicht werden. Insbesondere kann vorteilhaft eine besonders platzsparende Anordnung der Waschwasserverteilereinheit ermöglicht werden, wodurch beispielweise gute Strömungseigenschaften, wie beispielsweise ein geringer Luftwiderstand gegen einen auf die Wischblattvorrichtung anströmenden Fahrwind, erreicht werden können. Der Waschwasserzuleitungskanal ist insbesondere als eine längliche, in Umfangsrichtung bewandete Ausnehmung in dem Wischarmadapter ausgebildet, welche über eine Öffnung mit dem weiteren Waschwasserkanal verbunden ist. Insbesondere ist der weitere Waschwasserkanal der Adaptereinheit, insbesondere eine Haupterstreckungsrichtung des weiteren Waschwasserkanals der Adaptereinheit, im montierten, insbesondere unbewegten, Zustand zumindest im Wesentlichen senkrecht zu dem Wischblatt, insbesondere zu der Haupterstreckungsrichtung des Wischblatts, ausgerichtet. Insbesondere ist der weitere Waschwasserkanal der Adaptereinheit, insbesondere eine Haupterstreckungsrichtung des weiteren Waschwasserkanals der Adaptereinheit, zumindest im Wesentlichen senkrecht zu dem Waschwasserzuleitungskanal, insbesondere zu einer Haupterstreckungsrichtung des Waschwasserzuleitungskanals, ausgerichtet. Insbesondere ist der weitere Waschwasserkanal der Adaptereinheit und/oder der Waschwasserzuleitungskanal, insbesondere eine Haupterstreckungsrichtung des weiteren Waschwasserkanals der Adaptereinheit und/oder des Waschwasserzuleitungskanals, im montierten Zustand zumindest im Wesentlichen senkrecht zu der Rotationsachse des Wischblatts ausgerichtet. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweisen. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Vorteilhaft soll unter einstückig auch einteilig verstanden werden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt.

Weiterhin wird vorgeschlagen, dass das Kanalkupplungselement und das Adapterkupplungselement durch zumindest eine zumindest teilweise flexible Waschwasserleitung, insbesondere fluidführend und/oder fluiddicht, verbunden sind. Dadurch kann vorteilhaft eine Flexibilität erhöht werden. Insbesondere kann vorteilhaft eine Rotierbarkeit des Wischblatts gegenüber dem Wischarm und/oder dem Wischarmadapter erreicht werden, welche insbesondere fluiddicht ist. Unter "teilweise flexibel" soll insbesondere zumindest zu 50 %, vorzugsweise zumindest zu 75 % und bevorzugt zumindest zu 90 % flexibel verstanden werden. Die zumindest teilweise flexible Waschwasserleitung ist insbesondere zumindest teilweise aus einem flexiblen und/oder elastisch verformbaren Material, beispielsweise einem Gummi, ausgebildet. Insbesondere kann die flexible Waschwasserleitung als ein gummischlauchartiges Element ausgebildet sein, welches getrennt von dem Kanalkupplungselement und/oder dem Adapterkupplungselement und/oder zumindest teilweise einstückig mit dem Kanalkupplungselement und/oder dem Adapterkupplungselement ausgebildet ist. Unter der Wendung "fluidführend verbunden" soll insbesondere einen gemeinsamen Fluidkanal ausbildend verstanden werden.

Des Weiteren wird vorgeschlagen, dass das Adapterkupplungselement mit zumindest einer weiteren flexiblen Waschwasserleitung, insbesondere fluidführend und/oder fluiddicht, gekoppelt ist. Dadurch kann vorteilhaft eine Flexibilität weiter erhöht werden. Insbesondere kann Waschwasser vorteilhaft über einen großen Bereich verteilt werden. Die zumindest eine weitere flexible Waschwasserleitung ist vorzugsweise zumindest im Wesentlichen identisch zu der flexiblen Waschwasserleitung ausgebildet. Insbesondere kann die flexible Waschwasserleitung als ein gummischlauchartiges Element ausgebildet sein, welches getrennt von dem Kanalkupplungselement, dem Adapterkupplungselement und/oder der flexiblen Waschwasserleitung und/oder zumindest teilweise einstückig mit dem Kanalkupplungselement, dem Adapterkupplungselement und/oder der flexiblen Waschwasserleitung ausgebildet ist.

Weiterhin wird vorgeschlagen, dass das Adapterkupplungselement ein Dichtelement, insbesondere eine Dichtkante, zu einer wasserdichten Kupplung zumindest mit dem weiteren Waschwasserkanal der Adaptereinheit aufweist. Dadurch kann vorteilhaft eine gute Dichtigkeit der waschwasserführenden Elemente, insbesondere nach einer Verbindung von Wischarm und Wischblatt erreicht werden, wodurch vorteilhaft eine hohe Betriebssicherheit erreicht werden kann. Das Dichtelement, insbesondere die Dichtkante, des Adapterkupplungselements ist als Verjüngung eines Kuppelbereichs des Adapterkupplungselements mit dem weiteren Waschwasserkanal der Adaptereinheit ausgebildet. Das Dichtelement, insbesondere die Dichtkante, des Adapterkupplungselements ist insbesondere zumindest im Wesentlichen pilzförmig ausgebildet. Alternativ oder zusätzlich kann das Dichtelement des Adapterkupplungselements weitere Dichtungen, wie Gummidichtungen oder weitere dem Fachmann geläufige Dichtungen umfassen. Insbesondere weist der weitere Waschwasserkanal der Adaptereinheit eine Einengung auf. Die Einengung des weiteren Waschwasserkanals ist insbesondere an das Dichtelement, insbesondere die Dichtkante, des Adapterkupplungselements angepasst, bzw. zumindest teilweise komplementär zu dem Dichtelement, insbesondere der Dichtkante, des Adapterkupplungselements ausgebildet. Eine Verpressung der Einengung und des Dichtelements, insbesondere der Dichtkante, des Adapterkupplungselements führt insbesondere zu einer wasserdichten Verbindung des Adapterkupplungselements mit dem weiteren Waschwasserkanal. Zudem umfasst das erfindungsgemäße Adapterkupplungselement eine Verrastungsvorrichtung zu einer Positionierung des Adapterkupplungselements relativ zu der Adaptereinheit aufweist. Dadurch kann vorteilhaft eine einfache Montage ermöglicht werden. Die Verrastungsvorrichtung ist insbesondere als eine Anordnung ineinandergreifender Rastelemente, welche insbesondere von dem Adapterkupplungselement und/oder von der Adaptereinheit, vorzugsweise dem Wischarmadapter, ausgebildet sind, ausgebildet. Die Rastelemente sind als Rasthaken ausgebildet. Zusätzlich kann die Verrastungsvorrichtung auch alternative Fixierungen umfassen, beispielsweise Verschraubungen und/oder Verklebungen.

Außerdem ist zumindest ein Rastelement der Verrastungsvorrichtung; erfindungsgemäß zu einer Fixierung des Adapterkupplungselements in dem weiteren Waschwasserkanal der Adaptereinheit vorgesehen. Dadurch kann vorteilhaft ein guter Vereisungsschutz ermöglicht werden, insbesondere indem ein Herausdrücken des Adapterkupplungselements aus dem weiteren Waschwasserkanal bei einer Vereisung des Waschwassers in der Waschwasserverteilereinheit unterbunden werden kann. Dadurch kann vorteilhaft eine hohe Betriebssicherheit erreicht werden. Vorzugsweise unterbinden Rastelemente der Verrastungsvorrichtung eine Bewegung des Adapterkupplungselements relativ zu der Adaptereinheit, insbesondere in eine Einsteckrichtung des Adapterkupplungselements in dem weiteren Waschwasserkanal der Adaptereinheit.

Ferner wird vorgeschlagen, dass die Adaptereinheit einen Wischarmadapter zu einer Kopplung mit einem Wischarm eines Wischers, insbesondere Scheibenwischers, aufweist, welcher rotationsfest mit dem Adapterkupplungselement verbunden ist. Dadurch kann vorteilhaft eine wasserdichte, rotierbare Kopplung von Wischblatt und Wischarm ermöglicht werden, welche insbesondere besonders einfach aufgebaut ist. Vorteilhaft sind rotationsermöglichende Teile vollständig in einem Bauteil, insbesondere dem, die Adaptereinheit beinhaltenden Wischblatt angeordnet, wodurch insbesondere eine Montage und/oder Demontage vereinfacht werden kann. Insbesondere kann die Montage und/oder Demontage frei von Aus- und/oder Einfädelvorgängen und/oder Aus- und/oder Einrenkvorgängen stattfinden. Unter "rotationsfest verbunden" soll insbesondere eine Verbindung verstanden werden, mittels welcher zwei Teile so zueinander positionierbar sind, dass Relativbewegungen der zwei Teile bei einem normalen Betrieb und/oder einer normalen Benutzung ausgeschlossen sind.

Außerdem wird vorgeschlagen, dass die Adaptereinheit einen Wischarmadapter zu einer Kopplung mit einem Wischarm eines Wischers, insbesondere Scheibenwischers, aufweist, wobei das zumindest eine Kanalkupplungselement relativ zu dem Wischarmadapter beweglich ist. Insbesondere ist das zumindest eine Kanalkupplungselement relativ zu dem Wischarmadapter rotatorisch um die Rotationsachse beweglich. Dadurch kann vorteilhaft eine wasserdichte, rotierbare Kopplung von Wischblatt und Wischarm ermöglicht werden, welche insbesondere besonders einfach aufgebaut ist. Vorteilhaft sind rotationsermöglichende Teile vollständig in einem Bauteil, insbesondere dem, die Adaptereinheit beinhaltenden Wischblatt angeordnet, wodurch insbesondere eine Montage und/oder Demontage vereinfacht werden kann. Insbesondere kann die Montage und/oder Demontage frei von Aus- und/oder Einfädelvorgängen und/oder Aus- und/oder Einrenkvorgängen stattfinden. Insbesondere kann ein weiteres Kanalkupplungselement der Waschwasserverteilereinheit abhängig und/oder unabhängig von dem zumindest einen Kanalkupplungselement beweglich sein. Insbesondere ist das Kanalkupplungselement beweglich relativ zu dem Adapterkupplungselement. Insbesondere bewirkt eine Rotation und/oder Bewegung des Kanalkupplungselements relativ zu dem Adapterkupplungselement und/oder relativ zu dem Wischarmadapter eine elastische Verformung der flexiblen Waschwasserleitung.

Zudem wird vorgeschlagen, dass das Kanalkupplungselement, das Adapterkupplungselement, die flexible Waschwasserleitung, die weitere flexible Waschwasserleitung und/oder ein weiteres Kanalkupplungselement der Waschwasserverteilereinheit als ein einstückiges Waschwasserverteilerelement der Waschwasserverteilereinheit ausgebildet sind. Dadurch kann vorteilhaft eine Komplexität reduziert werden, insbesondere indem eine Gesamtzahl an Teilen reduziert werden kann. Zudem kann vorteilhaft eine Lebensdauer erhöht werden, insbesondere indem auf verschleiß- und/oder fehleranfällige Kupplungen und/oder Verbindungselemente verzichtet werden kann.

Wenn das Waschwasserverteilerelement als ein Mehrfarbenspritzgussteil ausgebildet ist, können vorteilhaft Produktionskosten und/oder Stückkosten gering gehalten werden, was insbesondere bei einem Verschleißteil wie einem Wischblatt, welches regelmäßig gewechselt werden muss, stark ins Gewicht fällt. Insbesondere ist das Waschwasserverteilerelement als ein Zweifarbenspritzgussteil ausgebildet, wobei die Kanalkupplungselemente und das Adapterkupplungselement zumindest teilweise, insbesondere vorwiegend, aus einem formstabilen Material und die flexiblen Waschwasserleitungen zumindest teilweise, insbesondere vorwiegend, aus einem flexiblen, beispielsweise gummiartigen Material, ausgebildet sind.

Weiterhin wird vorgeschlagen, dass die Waschwasserverteilereinheit eine, insbesondere schlauchfreie, Schnellkuppelvorrichtung zu einer fluiddichten Kupplung der Waschwasserverteilereinheit mit einer externen Waschwasserzuleitung aufweist. Dadurch kann vorteilhaft eine einfache und/oder schnelle Montage und/oder Demontage ermöglicht werden, wodurch insbesondere Montage- und/oder Austauschkosten gering gehalten werden können. Zudem kann vorteilhaft eine Komplexität verringert werden. Die Schnellkuppelvorrichtung ist zumindest teilweise einstückig mit der Adaptereinheit, insbesondere dem Wischarmadapter der Adaptereinheit, ausgebildet. Die externe Waschwasserzuleitung ist insbesondere als ein starres Zuleitungsrohr, welches insbesondere an dem Wischarm angeordnet ist, ausgebildet. Die Schnellkuppelvorrichtung ermöglicht vorteilhaft eine fluiddichte Verbindung der Waschwasserverteilereinheit mit einer Waschwasserzuleitung eines Wischarms, welche insbesondere frei ist von Einfädel-, Ausfädel-, Einrenk-, Ausrenk- und/oder Biegevorgängen, sowie frei ist von Drehbewegungen und/oder Schraubverbindungen. Die Schnellkuppelvorrichtung umfasst insbesondere ein Verbindungselement zu einer kraft- und/oder formschlüssigen Verbindung des Wischarms mit dem Wischarmadapter, beispielsweise eine Clips-Verbindung zu einem Einclipsen eines Wischarms in den Wischarmadapter. Vorzugsweise führt ein Einclipsen des Wischarms in den Wischarmadapter zu einem gleichzeitigen, fluiddichten Verschluss der waschwasserführenden Teile von Wischarm und Wischarmadapter. Vorzugsweise umfasst die Schnellkuppelvorrichtung ein Entriegelungselement, beispielsweise einen Entriegelungsknopf, mittels welchem eine Verbindung zwischen Wischarm und Wischblatt und/oder zwischen der Waschwasserverteilereinheit und der externen Zuleitung gelöst werden kann.

Zudem wird vorgeschlagen, dass die Schnellkuppelvorrichtung zumindest einen Aufnahmekanal zu einer Aufnahme einer, insbesondere steifen und/oder rohrförmigen, externen Waschwasserzuleitung eines Wischarms eines Wischers, insbesondere Scheibenwischers, aufweist. Dadurch kann vorteilhaft eine einfache Handhabung erreicht werden, insbesondere indem eine wasserdichte Verbindung zwischen Wischarm und Wischblatt mittels einer einfachen Schiebebewegung herstellbar ist. Der Aufnahmekanal ist insbesondere identisch mit dem Waschwasserzuleitungskanal des Wischarmadapters.

Wenn der Aufnahmekanal zumindest eine Einführungsschräge aufweist, kann vorteilhaft eine einfache, schnelle und/oder sichere Montage ermöglicht werden, insbesondere indem die externe Waschwasserzuleitung selbsttätig in eine richtige Endposition geleitet werden kann. Dadurch kann vorteilhaft eine wasserdichte, waschwasserleitende Verbindung zwischen dem Wischarm und dem Wischblatt sichergestellt werden. Insbesondere bildet der Aufnahmekanal eine Montageschiene zu einer Unterstützung einer Montage des Wischblatts mit dem Wischarm aus. Dadurch ähnelt eine Montage der erfindungsgemäßen Wischblattvorrichtung, insbesondere des Scheibenwischer-Wischblatts, vorteilhaft einer gängigen Montagemethode für Wischblätter, wodurch Fehlmontagen vorteilhaft verhindert werden können.

Vorteilhaft ist bei einer Kupplung mittels der Schnellkuppelvorrichtung der Aufnahmekanal durch ein Dichtelement, insbesondere eine Dichtkante, der externen Waschwasserzuleitung wasserdicht mit der externen Waschwasserzuleitung verbindbar. Dadurch kann insbesondere eine gute Dichtigkeit der waschwasserführenden Elemente, insbesondere nach einer Verbindung von Wischarm und Wischblatt erreicht werden, wodurch vorteilhaft eine hohe Betriebssicherheit erreicht werden kann. Das Dichtelement, insbesondere die Dichtkante, der externen Waschwasserzuleitung ist insbesondere als eine Verjüngung der externen Waschwasserzuleitung, insbesondere in einem äußeren Endbereich der externen Waschwasserzuleitung, ausgebildet. Das Dichtelement, insbesondere die Dichtkante, der externen Waschwasserzuleitung ist insbesondere zumindest im Wesentlichen pilzförmig ausgebildet. Alternativ oder zusätzlich kann das Dichtelement der externen Waschwasserzuleitung weitere Dichtungen, wie Gummidichtungen oder weitere dem Fachmann geläufige Dichtungen umfassen. Insbesondere weist der Aufnahmekanal eine Einengung, vorzugsweise in einem inneren Endbereich des Aufnahmekanals und/oder in einem Nahbereich des Übergangs und/oder der Öffnung vom Aufnahmekanal zum weiteren Waschwasserkanal, auf. Die Einengung des Aufnahmekanals ist insbesondere an die Verjüngung der externen Waschwasserzuleitung angepasst, bzw. zumindest teilweise komplementär zu der Verjüngung der externen Waschwasserzuleitung ausgebildet. Eine Verpressung eines Endbereichs der externen Waschwasserzuleitung mit dem Dichtelement, insbesondere der Dichtkante, der externen Waschwasserzuleitung führt insbesondere zu einer wasserdichten Verbindung der externen Waschwasserzuleitung mit dem Aufnahmekanal und/oder dem weiteren Waschwasserkanal.

Zudem wird vorgeschlagen, dass die Adaptereinheit einen Wischarmadapter zu einer Kopplung mit einem Wischarm eines Wischers, insbesondere Scheibenwischers, aufweist, welcher eine Clips-Verbindung zu einer Verbindung mit dem Wischarm umfasst, wobei die Clips-Verbindung dazu vorgesehen ist, eine Einführtiefe für eine externe Waschwasserzuleitung des Wischarms in den Aufnahmekanal vorzugeben. Dadurch kann vorteilhaft eine einfache Handhabung, insbesondere eine einfache und sichere Montage, ermöglicht werden. Insbesondere kann eine Montage von Wischarm und Wischblatt frei von besonderem Aufwand zur Herstellung eines Waschwasseranschlusses erfolgen, insbesondere da eine Verbindung und Abdichtung automatisch zusammen mit einem Einclipsen des Wischarms in die Clips-Verbindung geschieht. Eine Clips-Verbindung ist insbesondere als eine zumindest formschlüssige Verbindung ausgebildet. Bei einer Verbindung mittels der Clips-Verbindung greifen Wischarm und Wischarmadapter zumindest teilweise ineinander ein und werden durch ein Verrasten relativ zueinander fixiert. Die Verbindung zwischen der externen Waschwasserzuleitung und dem weiteren Waschwasserkanal und/oder dem Aufnahmekanal ist vorzugsweise frei von verrastenden Verbindungselementen. Insbesondere wird die Verbindung zwischen der externen Waschwasserzuleitung und dem weiteren Waschwasserkanal und/oder dem Aufnahmekanal durch die Clips-Verbindung des Wischarms mit dem Wischarmadapter gehalten.

Ferner wird ein Wischer, insbesondere Scheibenwischer, mit einer Wischblattvorrichtung vorgeschlagen. Dadurch kann vorteilhaft ein Wischer mit vorteilhaften Reinigungseigenschaften erreicht werden.

Die erfindungsgemäße Wischblattvorrichtung soll hierbei nicht auf die oben beschriebene Anwendung und Ausführungsform beschränkt sein. Insbesondere kann die erfindungsgemäße Wischblattvorrichtung zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische, perspektivische Ansicht eines Wischers mit einem Wischarm und einer Wischblattvorrichtung,
- Fig. 2: eine schematische Ansicht von unten auf die Wischblattvorrichtung,
- Fig. 3: eine schematische, teilweise Schnittansicht der Wischblattvorrichtung und
- Fig. 4: eine schematische, teilweise Schnittansicht der Wischblattvorrichtung mit eingeführter externer Waschwasserzuleitung.

### Beschreibung des Ausführungsbeispiels

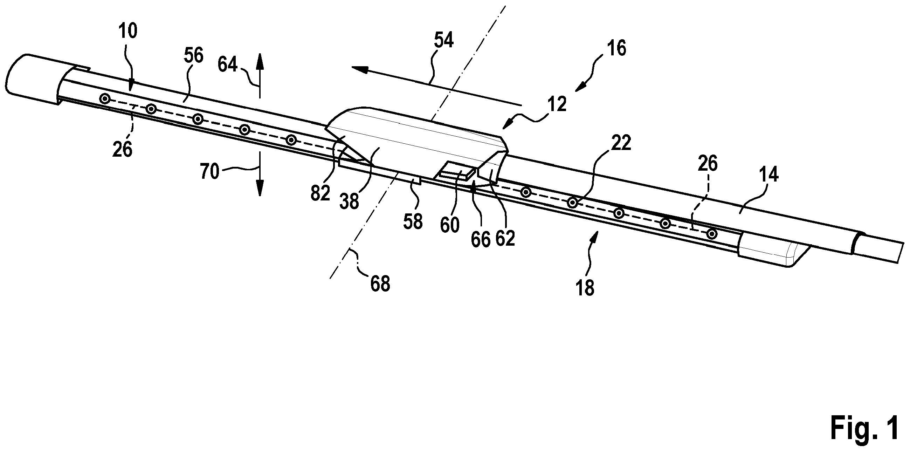

Fig. 1 zeigt einen Wischer 16 mit einem Wischarm 14 und einer Wischblattvorrichtung. Die Wischblattvorrichtung weist ein Wischblatt 10 auf. Das Wischblatt 10 weist eine Haupterstreckungsrichtung 54 auf. Das Wischblatt 10 weist eine Wischblattleiste 56 auf.

Die Wischblattvorrichtung weist eine Sprüheinheit 18 auf. Die Sprüheinheit 18 ist zu einem Versprühen von Waschwasser vorgesehen. Die Sprüheinheit 18 ist in dem Wischblatt 10 integriert. Die Sprüheinheit 18 weist Düsenelemente 22 auf. Die Düsenelemente 22 sind als Austrittsöffnungen ausgebildet, aus welchen Waschwasser bei einer Aktivierung der Sprüheinheit 18 austreten kann. Die Düsenelemente 22 sind in der Haupterstreckungsrichtung 54 des Wischblatts 10 entlang dem Wischblatt 10 angeordnet. Die Düsenelemente 22 sind zumindest im Wesentlichen regelmäßig voneinander beabstandet.

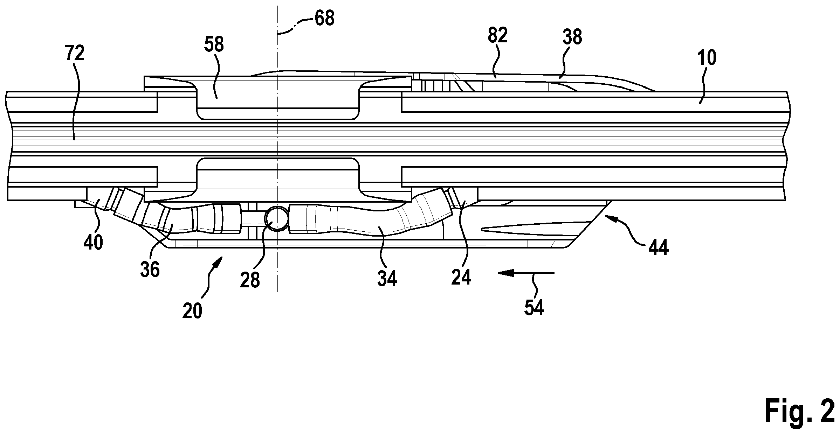

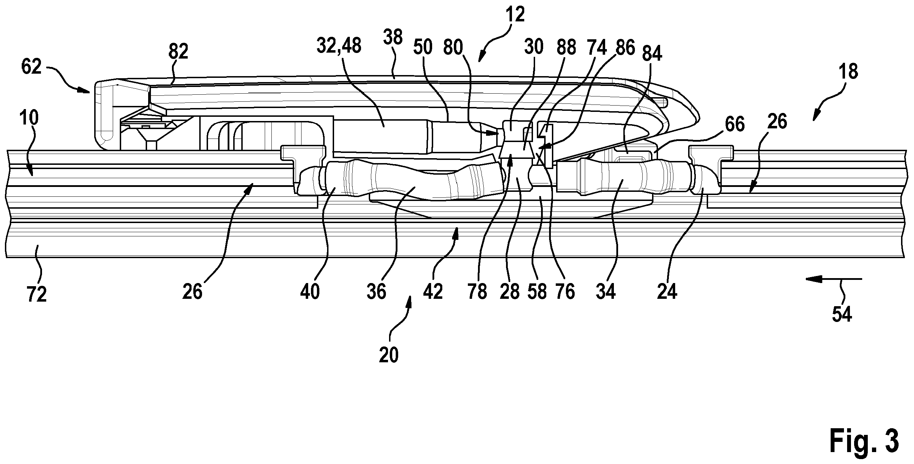

Die Wischblattvorrichtung weist eine Adaptereinheit 12 auf. Die Adaptereinheit 12 ist zu einer Kopplung des Wischblatts 10 mit einem Wischarm 14 des Wischers 16 vorgesehen. Die Adaptereinheit 12 ist in einem montierten Zustand unverlierbar mit dem Wischblatt 10 verbunden. Die Adaptereinheit 12 ist in dem montierten Zustand unlösbar mit dem Wischblatt 10 verbunden. Die Adaptereinheit 12 weist einen Wischblattadapter 58 auf. Der Wischblattadapter 58 ist mit dem Wischblatt 10 unlösbar gekoppelt. Die Adaptereinheit 12 weist erfindungsgemäß einen Wischarmadapter 38 auf. Der Wischarmadapter 38 ist lösbar mit dem Wischarm 14 gekoppelt. Der Wischarmadapter 38 ist zu einer Kopplung der Adaptereinheit 12 mit dem Wischarm 14 des Wischers 16 vorgesehen. Die Adaptereinheit 12 weist eine Haltefeder 66 auf. Die Haltefeder 66 ist unlösbar mit dem Wischarmadapter 38 gekoppelt. Die Haltefeder 66 ist unlösbar mit dem Wischblattadapter 58 gekoppelt. Die Haltefeder 66 erlaubt eine rotatorische Auslenkung des Wischblatts
10 relativ zu dem Wischarm 14 und/oder dem Wischarmadapter 38 um eine Rotationsachse 68. Das Wischblatt 10 kann auf einer vom Wischarm 14 im zum Wischer 16 montierten Zustand wegzeigenden Seite in einer von einer Wischlippe 72 (vgl. Fig. 2) des Wischblatts 10 wegzeigenden Richtung 64 um bis zu 15° geschwenkt werden. In einer auf die Wischlippe 72 zuweisende Richtung 70 beträgt der maximale Schwenkwinkel 2°. Die Haltefeder 66 weist ein Anschlagelement 84 auf (vgl. Fig. 3). Das Anschlagelement 84 ist zu einer Begrenzung der rotatorischen Auslenkung des Wischblatts 10 relativ zu dem Wischarm 14 und/oder dem Wischarmadapter 38 vorgesehen. Das Anschlagelement 84 kontaktiert im Anschlag den Wischarmadapter 38.

Die Adaptereinheit 12 weist ein Betätigungselement 60 auf. Das Betätigungselement 60 ist zu einer Entriegelung der Kopplung zwischen Wischarm 14 und Wischarmadapter 38 vorgesehen. Der Wischarmadapter 38 weist eine Wischarmaufnahme 62 auf. Die Wischarmaufnahme 62 ist zu einer Aufnahme eines Teils des Wischarms 14 vorgesehen. Die Wischarmaufnahme 62 ist zu einer Aufnahme eines Endes des Wischarms 14 vorgesehen. Zu einer Verbindung zwischen Wischarm 14 und Adaptereinheit 12 wird der Wischarm 14 in die Wischarmaufnahme 62 entlang der Haupterstreckungsrichtung 54 eingeführt. Die Wischarmaufnahme 62 und der Wischarm 14 weisen Formschlusselemente (nicht gezeigt) zu einer Bildung einer Clips-Verbindung zwischen Wischarm 14 und Adaptereinheit 12 auf. Eine Betätigung des Betätigungselements 60 hebt den Formschluss auf und erlaubt ein Herausziehen des Wischarms 14 aus der Wischarmaufnahme 62. Das Wischblatt 10 und die Adaptereinheit 12 sind als ein einzelnes zusammenhängendes Bauteil ausgebildet, welches bei einem Wechsel des Wischblatts 10 komplett ausgetauscht wird. Der Wischarmadapter 38 weist ein Gehäuse 82 auf. Das Gehäuse 82 weist eine aerodynamische Außenform auf. Die aerodynamische Außenform ist für eine Luftanströmung aus einer Richtung parallel zu der Rotationsachse 68 optimiert.

Fig. 2 zeigt eine Unteransicht der Wischblattvorrichtung. Das Wischblatt 10 weist die Wischlippe 72 auf. Die Wischlippe 72 ist dazu vorgesehen, bei einem Wischvorgang einen berührenden Kontakt zu einer zu wischenden Scheibe auszubilden. Die Wischblattvorrichtung weist eine Waschwasserverteilereinheit 20 auf. Die Waschwasserverteilereinheit 20 ist zu einer Durchleitung eines Fluids, beispielsweise Waschwasser, vorgesehen. Die Waschwasserverteilereinheit 20 ist zu einer Zuführung von Waschwasser zu der Sprüheinheit 18 vorgesehen.

Fig. 3 zeigt eine seitliche teilweise Schnittansicht der Wischblattvorrichtung. Das Wischblatt 10 und die Adaptereinheit 12 sind geschnitten dargestellt. Die Waschwasserverteilereinheit 20 ist nicht geschnitten dargestellt. Die Waschwasserverteilereinheit 20 weist ein Kanalkupplungselement 24 und eine weiteres Kanalkupplungselement 40 auf. Die Kanalkupplungselemente 24, 40 sind zu einer fluidführenden Kupplung eines Teils der Waschwasserverteilereinheit 20 mit einem Waschwasserkanal 26 der Sprüheinheit 18 vorgesehen (vgl. auch Fig. 1). Der Waschwasserkanal 26 der Sprüheinheit 18 verbindet die Düsenelemente 22. Mittels dem Waschwasserkanal 26 der Sprüheinheit 18 wird Waschwasser zu den Düsenelementen 22 geführt. Der Waschwasserkanal 26 der Sprüheinheit 18 ist in dem Wischblatt 10 integriert. Das Wischblatt 10 weist zwei Waschwasserkanäle 26 auf, je einen auf jeder Seite der Adaptereinheit 12. Die Kanalkupplungselemente 24, 40 bilden eine fluiddichte Kupplung zur Führung von Waschwasser aus. Die Kanalkupplungselemente 24, 40 ist relativ zu dem Wischarmadapter 38 beweglich gelagert.

Die Waschwasserverteilereinheit 20 weist ein Adapterkupplungselement 28 auf. Das Adapterkupplungselement 28 bildet eine fluiddichte Kupplung zur Führung von Waschwasser aus. Das Adapterkupplungselement 28 ist zu einer fluidführenden Kupplung eines weiteren Teils der Waschwasserverteilereinheit 20 mit einem weiteren Waschwasserkanal 30 der Adaptereinheit 12 vorgesehen. Das Adapterkupplungselement 28 ist in eine Öffnung 78 des weiteren Waschwasserkanals 30 eingesteckt. Das Adapterkupplungselement 28 weist ein Dichtelement 88 auf. Das Dichtelement 88 des Adapterkupplungselements 28 ist als eine Dichtkante ausgebildet. Das Dichtelement 88 des Adapterkupplungselements 28 ist pilzförmig ausgebildet. Das Dichtelement 88 des Adapterkupplungselements 28 ist als pilzförmige Verjüngung einer wischarmadapterseitigen Öffnung des Adapterkupplungselements 28 ausgebildet. Das Dichtelement 88 des Adapterkupplungselements 28 ist zu einer wasserdichten Kupplung mit dem weiteren Waschwasserkanal 30 der Adaptereinheit 12 vorgesehen. Das Dichtelement 88 des Adapterkupplungselements 28 ist in eine vertikale Öffnung des weiteren Waschwasserkanals 30 der Adaptereinheit 12 eingesteckt. Der weitere Waschwasserkanal 30 der Adaptereinheit 12 weist auf einer Innenseite eine zu dem Dichtelement 88 des Adapterkupplungselements 28 korrespondierende Wandoberfläche auf, mit welcher das Dichtelement 88 des Adapterkupplungselements 28 bei einer Montage verpresst wird.

Das Adapterkupplungselement 28 weist eine Verrastungsvorrichtung 86 auf. Die Verrastungsvorrichtung 86 ist zu einer Positionierung des Adapterkupplungselements 28 relativ zu der Adaptereinheit 12 vorgesehen. Das Adapterkupplungselement 28 weist ein Rastelement 74 auf. Die Verrastungsvorrichtung 86 weist ein Rastelement 74 auf. Die Verrastungsvorrichtung 86 ist zu einer Fixierung des Adapterkupplungselements 28 in dem weiteren Waschwasserkanal 30 der Adaptereinheit 12 vorgesehen. Die Verrastungsvorrichtung 86 verhindert ein Herausdrücken des Adapterkupplungselements 28 aus dem weiteren Waschwasserkanal 30 der Adaptereinheit 12 durch eine Ausdehnung von Waschwasser bei einem Einfrieren des Waschwassers. Das erfindungsgemäße Rastelement 74 ist als Rasthaken ausgebildet. Der Wischarmadapter 38 weist ein korrespondierendes Rastelement 76 auf. Das korrespondierende Rastelement 76 ist als ein Rasthaken ausgebildet. Das Rastelement 74 und das korrespondierende Rastelement 76 greifen ineinander ein. Das Adapterkupplungselement 28 ist mittels des Rastelements 74 an dem Wischarmadapter 38 positionsfest fixiert. Das Adapterkupplungselement 28 ist rotationsfest mit dem Wischarmadapter 38 verbunden.

Die Waschwasserverteilereinheit 20 weist eine flexible Waschwasserleitung 34 auf. Die flexible Waschwasserleitung 34 ist dazu vorgesehen, eine Rotation des Wischblatts 10 um die Rotationsachse 68 zu erlauben. Die flexible Waschwasserleitung 34 ist zwischen dem Kanalkupplungselement 24 und dem Adapterkupplungselement 28 angeordnet. Die flexible Waschwasserleitung 34 verbindet das Kanalkupplungselement 24 mit dem Adapterkupplungselement 28. Die flexible Waschwasserleitung 34 ist fluiddicht mit dem Adapterkupplungselement 28 verbunden. Die flexible Waschwasserleitung 34 ist fluiddicht mit dem Kanalkupplungselement 24 verbunden. Die Waschwasserverteilereinheit 20 weist eine weitere flexible Waschwasserleitung 36 auf. Die weitere flexible Waschwasserleitung 36 ist zwischen dem weiteren Kanalkupplungselement 40 und dem Adapterkupplungselement 28 angeordnet. Die weitere flexible Waschwasserleitung 36 verbindet das weitere Kanalkupplungselement 40 mit dem Adapterkupplungselement 28. Die weitere flexible Waschwasserleitung 36 ist fluiddicht mit dem Adapterkupplungselement 28 verbunden. Die weitere flexible Waschwasserleitung 36 ist fluiddicht mit dem weiteren Kanalkupplungselement 40 verbunden.

Die Waschwasserverteilereinheit 20 weist ein Waschwasserverteilerelement 42 auf. Das Waschwasserverteilerelement 42 ist einstückig ausgebildet. Das Waschwasserverteilerelement 42 ist als ein Mehrfarbenspritzgussteil ausgebildet. Das Waschwasserverteilerelement 42 ist als ein Zweifarbenspritzgussteil ausgebildet. Die flexiblen Waschwasserleitungen 34, 36 sind gummiartig gespritzt. Das Adapterkupplungselement 28 ist hartplastikartig gespritzt. Die Kanalkupplungselemente 24, 40 sind hartplastikartig gespritzt. Das Kanalkupplungselement 24 und die die flexible Waschwasserleitung 34 bilden einen Teil des Waschwasserverteilerelements 42 aus. Das Kanalkupplungselement 24 und die flexible Waschwasserleitung 34 sind einstückig zueinander ausgebildet. Das Adapterkupplungselement 28 bildet einen Teil des Waschwasserverteilerelements 42 aus. Das Adapterkupplungselement 28 ist einstückig mit der flexiblen Waschwasserleitung 34 ausgebildet. Die weitere Waschwasserleitung 36 bildet einen Teil des Waschwasserverteilerelements 42 aus. Das Adapterkupplungselement 28 ist einstückig mit der weiteren flexiblen Waschwasserleitung 36 ausgebildet. Das weitere Kanalkupplungselement 40 bildet einen Teil des Waschwasserverteilerelements 42 aus. Das weitere Kanalkupplungselement 40 ist einstückig mit der weiteren flexiblen Waschwasserleitung 36 ausgebildet. Alternativ kann zumindest die flexible Waschwasserleitung 34 und/oder die weitere flexible Waschwasserleitung 36 getrennt von dem Adapterkupplungselement 28 und/oder den Kanalkupplungselementen 24, 40 ausgebildet sein. Beispielsweise könnte zumindest eine der flexiblen Waschwasserleitungen 34, 36 als ein separater Gummischlauch ausgebildet sein, welcher auf Schlauchstutzen des Adapterkupplungselements 28 und/oder der Kanalkupplungselemente 24, 40 stülpbar ist.

Der weitere Waschwasserkanal 30 ist teilweise durch die Adaptereinheit 12 ausgebildet. Der weitere Waschwasserkanal 30 ist als ein Hohlraum in der Adaptereinheit 12 ausgebildet. Der weitere Waschwasserkanal 30 ist erfindungsgemäß teilweise durch den Wischarmadapter 38 ausgebildet. Der weitere Waschwasserkanal 30 ist als ein Hohlraum in dem Wischarmadapter 38 ausgebildet.

Der weitere Waschwasserkanal 30 ist einstückig mit der Adaptereinheit 12 ausgebildet. Der weitere

Waschwasserkanal 30 ist einstückig mit dem Wischarmadapter 38 ausgebildet. Der weitere Waschwasserkanal 30 weist eine weitere Öffnung 80 auf. Die weitere Öffnung 80 des weiteren Waschwasserkanals 30 ist in einem 90 Grad Winkel zu der Öffnung 78 des weiteren Waschwasserkanals 30 angeordnet.

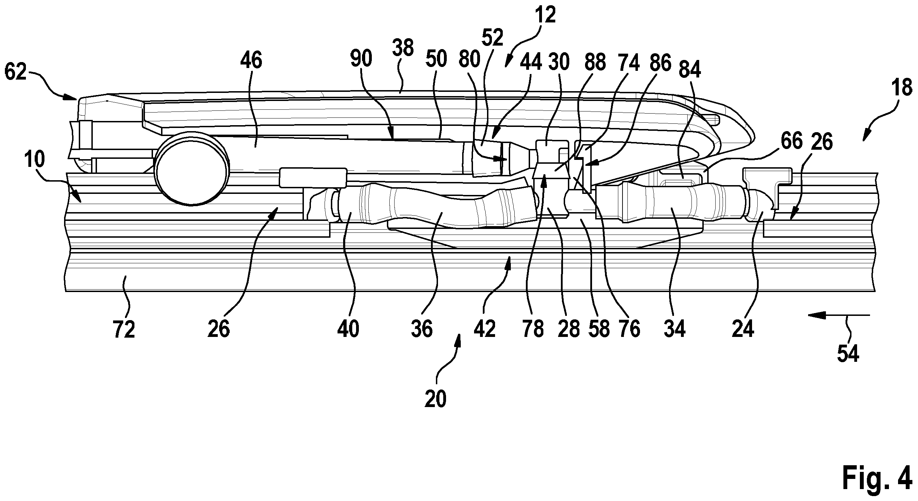

Die Waschwasserverteilereinheit 20 weist einen Waschwasserzuleitungskanal 32 auf. Der Waschwasserzuleitungskanal 32 ist gewinkelt zu dem weiteren Waschwasserkanal 30 der Adaptereinheit 12 angeordnet. Ein Winkel zwischen dem weiteren Waschwasserkanal 30 der Adaptereinheit 12 und dem Waschwasserzuleitungskanal 32 beträgt 90°. Der Waschwasserzuleitungskanal 32 ist zumindest teilweise durch die Adaptereinheit 12 ausgebildet. Der Waschwasserzuleitungskanal 32 ist einstückig mit der Adaptereinheit 12 ausgebildet. Der Waschwasserzuleitungskanal 32 ist einstückig mit dem Wischarmadapter 38 ausgebildet. Der Waschwasserzuleitungskanal 32 ist über die weitere Öffnung 80 mit dem weiteren Waschwasserkanal 30 verbunden. Der Waschwasserzuleitungskanal 32 verläuft zumindest im Wesentlichen parallel zu der Haupterstreckungsrichtung 54 des Wischblatts 10. Der Waschwasserzuleitungskanal 32 weist an einem der weiteren Öffnung 80 zum weiteren Waschwasserkanal 30 gegenüberliegenden Ende eine Aufnahmeöffnung zu einer Aufnahme einer externen Waschwasserzuleitung 46 auf (vgl. Fig. 4). Der Waschwasserzuleitungskanal 32 ist in Richtung der weiteren Öffnung 80 zu dem weiteren Waschwasserkanal 30 hin verjüngt.

Die Waschwasserverteilereinheit 20 weist eine Strömungsrichtung auf, in welche in einem Sprühbetrieb der Sprüheinheit 18 Waschwasser die Waschwasserverteilereinheit 20 durchströmt. Der Waschwasserzuleitungskanal 32 ist in Strömungsrichtung stromaufwärts von dem weiteren Waschwasserkanal 30, von dem Adapterkupplungselement 28, von den Kanalkupplungselementen 24, 40 und von der Sprüheinheit 18 bzw. den Waschwasserkanälen 26 der Sprüheinheit 18 angeordnet. Der weitere Waschwasserkanal 30 ist in Strömungsrichtung stromaufwärts von dem Adapterkupplungselement 28, von den Kanalkupplungselementen 24, 40 und von der Sprüheinheit 18, bzw. den Waschwasserkanälen 26 der Sprüheinheit 18 angeordnet. Die Kanalkupplungselemente 24, 40 sind in Strömungsrichtung stromaufwärts von der Sprüheinheit 18, bzw. den Waschwasserkanälen 26 der Sprüheinheit 18 angeordnet.

Fig. 4 zeigt die Wischblattvorrichtung mit in den Waschwasserzuleitungskanal 32 eingeführter externer Waschwasserzuleitung 46. Die Waschwasserverteilereinheit 20 weist eine Schnellkuppelvorrichtung 44 auf. Die Schnellkuppelvorrichtung 44 ist schlauchfrei ausgebildet. Die Schnellkuppelvorrichtung 44 ist zu einer fluiddichten Kupplung der Waschwasserverteilereinheit 20 mit der externen Waschwasserzuleitung 46 vorgesehen. Die Schnellkuppelvorrichtung 44 ist zu einer fluiddichten Kupplung des Waschwasserzuleitungskanals 32 mit der externen Waschwasserzuleitung 46 vorgesehen. Der Wischarm 14 weist die externe Waschwasserzuleitung 46 auf. Die externe Waschwasserzuleitung 46 ist als ein starres Rohr ausgebildet. Die externe Waschwasserzuleitung 46 ist mit dem Wischarm 14 gekoppelt. Die externe Waschwasserzuleitung 46 ist positionsfest relativ zu dem Wischarm 14 an dem Wischarm 14 angeordnet. Die Kopplung der externen Waschwasserzuleitung 46 mit dem Wischarm 14 ist lösbar. Eine Verbindung des Wischarms 14 mit der Adaptereinheit 12 führt gleichzeitig zu einer Kupplung der Schnellkuppelvorrichtung 44.

Die Schnellkuppelvorrichtung 44 weist einen Aufnahmekanal 48 auf. Der Aufnahmekanal 48 ist zu einer Aufnahme der externen Waschwasserzuleitung 46 des Wischarms 14 vorgesehen. Der Aufnahmekanal 48 ist identisch mit dem Waschwasserzuleitungskanal 32. Bei einer Montage des Wischarms 14 mit dem Wischblatt 10 wird die externe Waschwasserzuleitung 46 in den Aufnahmekanal 48, bzw. den Waschwasserzuleitungskanal 32 durch seitliches Einschieben entlang der Haupterstreckungsrichtung 54 eingeführt. Der Aufnahmekanal 48 weist eine Einführungsschräge 50 auf. Die Einführungsschräge 50 ist zu einer Unterstützung einer Positionierung der externen Waschwasserzuleitung 46 relativ zu der Adaptereinheit 12 vorgesehen. Der Aufnahmekanal 48 bildet eine Montageschiene 90 aus. Die Montageschiene 90 dient zu einer Unterstützung einer Montage des Wischblatts 10 an dem Wischarm 14. Die Montageschiene 90 ist dazu vorgesehen, eine Bewegung zum Einstecken des Wischarms 14 in die Adaptereinheit 12 vorzugeben und/oder zu führen. Die Montageschiene 90 erleichtert ein seitliches Einschieben des Wischarms 14 in die Wischarmaufnahme 62 und/oder der externen Waschwasserzuleitung 46 in den Aufnahmekanal 48.

Der Wischarmadapter 38 umfasst eine Clips-Verbindung (nicht gezeigt) zu einer Verbindung mit dem Wischarm 14. Die Clips-Verbindung ist dazu vorgesehen, eine Einführtiefe für die externe Waschwasserzuleitung 46 des Wischarms 14 in den Aufnahmekanal 48 vorzugeben. Die Schnellkuppelvorrichtung 44 ist frei von einer weiteren Clips-Verbindung. Ein Schließen der Clips-Verbindung legt eine Position der externen Waschwasserzuleitung 46 in dem Aufnahmekanal 48 fest. Die Länge und/oder die optimale Einführtiefe der externen Waschwasserzuleitung 46 sind mit einer Einführtiefe des Wischarms 14 in der Wischarmaufnahme 62 abgestimmt.

Die externe Waschwasserzuleitung 46 weist ein Dichtelement 52 auf. Das Dichtelement 52 der externen Waschwasserzuleitung 46 ist als eine Dichtkante ausgebildet. Das Dichtelement 52 der externen Waschwasserzuleitung 46 ist pilzförmig ausgebildet. Das Dichtelement 52 der externen Waschwasserzuleitung 46 ist als pilzförmige Verjüngung eines Endes der externen Waschwasserzuleitung 46 ausgebildet. Das Dichtelement 52 der externen Waschwasserzuleitung 46 ist zu einer wasserdichten Kupplung mit dem Aufnahmekanal 48 vorgesehen. Das Dichtelement 52 der externen Waschwasserzuleitung 46 ist in den durch die Einführungsschräge 50 verjüngten Aufnahmekanal 48, insbesondere mittels einer seitlichen Schiebebewegung, eingesteckt. Der weitere Aufnahmekanal 48 weist auf einer Innenseite eine zu dem Dichtelement 52 der externen Waschwasserzuleitung 46 korrespondierende Wandoberfläche auf, mit welcher das Dichtelement 88 des Adapterkupplungselements 28 bei einer Montage verpresst wird. Das Dichtelement 52 der externen Waschwasserzuleitung 46 wird bei einer Verbindung mittels der Schnellkuppelvorrichtung 44 mit der Einführungsschräge 50 des Aufnahmekanals 48 verpresst. Bei einer Kupplung mittels der Schnellkuppelvorrichtung 44 ist der Aufnahmekanal 48 durch das Dichtelement 52 der externen Waschwasserzuleitung 46 wasserdicht mit der externen Waschwasserzuleitung 46 verbindbar. Bei einem Lösen des Wischarms 14 von der Adaptereinheit 12 mittels der Clips-Verbindung wird gleichzeitig die wasserdichte Verbindung der Schnellkuppelvorrichtung 44 getrennt.

## Patentansprüche

1. Wischblattvorrichtung, insbesondere Scheibenwischer-Wischblattvorrichtung, mit zumindest einem Wischblatt (10), mit zumindest einer Adaptereinheit (12) zu einer Kopplung des Wischblatts (10) mit einem Wischarm (14) eines Wischers (16), insbesondere Scheibenwischers, wobei die Adaptereinheit (12) einen Wischarmadapter (38) und einen Wischblattadapter (58) aufweist, mit zumindest einer in dem Wischblatt (10) integrierten Sprüheinheit (18), und mit zumindest einer Waschwasserverteilereinheit (20) zu einer Zuführung von Waschwasser zu der Sprüheinheit (18), insbesondere zu zumindest im Wesentlichen parallel zu einer Haupterstreckungsrichtung (54) des Wischblatts (10) entlang des Wischblatts (10) angeordneten Düsenelementen (22) der Sprüheinheit (18), wobei die Waschwasserverteilereinheit (20) zumindest ein Kanalkupplungselement (24) zu einer, insbesondere für eine Durchleitung eines Fluids vorgesehenen, vorzugsweise fluiddichten, Kupplung zumindest eines Teils der Waschwasserverteilereinheit (20) mit einem Waschwasserkanal (26) der Sprüheinheit (18) aufweist, und wobei die Waschwasserverteilereinheit (20) zumindest ein Adapterkupplungselement (28) zu einer, insbesondere für eine Durchleitung eines Fluids vorgesehenen, vorzugsweise fluiddichten, Kupplung zumindest eines weiteren Teils der Waschwasserverteilereinheit (20) mit einem weiteren Waschwasserkanal (30) der Adaptereinheit (12) aufweist, wobei der weitere Waschwasserkanal (30) zumindest teilweise durch den Wischarmadapter (38) der Adaptereinheit (12) ausgebildet ist, **dadurch gekennzeichnet, dass** das Adapterkupplungselement (28) eine Verrastungsvorrichtung (86) zu einer Positionierung des Adapterkupplungselements (28) relativ zu der Adaptereinheit (12) aufweist, wobei zumindest ein Rastelement (74) der Verrastungsvorrichtung (86) zu einer Fixierung des Adapterkupplungselements (28) in dem weiteren Waschwasserkanal (30) der Adaptereinheit (12) vorgesehen ist, und wobei das Rastelement (74) als Rasthaken ausgebildet ist.

2. Wischblattvorrichtung nach Anspruch 1, **dadurch gekennzeichnet, dass** die Adaptereinheit (12) in einem montierten Zustand zumindest im Wesentlichen unverlierbar, insbesondere zumindest im Wesentlichen unlösbar, mit dem Wischblatt (10) verbunden ist.

3. Wischblattvorrichtung nach Anspruch 1 oder 2, **dadurch gekennzeichnet, dass** die Waschwasserverteilereinheit (20) einen einstückig mit der Adaptereinheit (12) ausgebildeten Waschwasserzuleitungskanal (32) aufweist, welcher gewinkelt zu dem weiteren Waschwasserkanal (30) der Adaptereinheit (12) angeordnet ist.

4. Wischblattvorrichtung nach einem der vorhergehenden Ansprüche, **dadurch gekennzeichnet, dass** das Kanalkupplungselement (24) und das Adapterkupplungselement (28) durch zumindest eine zumindest teilweise flexible Waschwasserleitung (34) verbunden sind.

5. Wischblattvorrichtung nach Anspruch 4, **dadurch gekennzeichnet, dass** das Adapterkupplungselement (28) mit zumindest einer weiteren flexiblen Waschwasserleitung (36) gekoppelt ist.

6. Wischblattvorrichtung nach einem der vorhergehenden Ansprüche, **dadurch gekennzeichnet, dass** das Adapterkupplungselement (28) ein Dichtelement (88), insbesondere eine Dichtkante, zu einer wasserdichten Kupplung zumindest mit dem weiteren Waschwasserkanal (30) der Adaptereinheit (12) aufweist.

7. Wischblattvorrichtung nach einem der vorhergehenden Ansprüche, **dadurch gekennzeichnet, dass** die Adaptereinheit (12) den Wischarmadapter (38) zu einer Kopplung mit einem Wischarm (14) eines Wischers (16) aufweist, welcher rotationsfest mit dem Adapterkupplungselement (28) verbunden ist.

8. Wischblattvorrichtung nach einem der vorhergehenden Ansprüche, **dadurch gekennzeichnet, dass** die Adaptereinheit (12) den Wischarmadapter (38) zu einer Kopplung mit einem Wischarm (14) eines Wischers (16) aufweist, wobei das zumindest eine Kanalkupplungselement (24) relativ zu dem Wischarmadapter (38) beweglich ist.

9. Wischblattvorrichtung nach Anspruch 5, **dadurch gekennzeichnet, dass** das Kanalkupplungselement (24), das Adapterkupplungselement (28), die flexible Waschwasserleitung (34), die weitere flexible Waschwasserleitung (36) und/oder ein weiteres Kanalkupplungselement (40) der Waschwasserverteilereinheit (20) als ein einstückiges Waschwasserverteilerelement (42) der Waschwasserverteilereinheit (20) ausgebildet sind.

10. Wischblattvorrichtung nach Anspruch 9, **dadurch gekennzeichnet, dass** das Waschwasserverteilerelement (42) als ein Mehrfarbenspritzgussteil ausgebildet ist.

11. Wischblattvorrichtung nach Anspruch 1, **dadurch gekennzeichnet, dass** die Waschwasserverteilereinheit (20) eine, insbesondere schlauchfreie, Schnellkuppelvorrichtung (44) zu einer fluiddichten Kupplung der Waschwasserverteilereinheit (20) mit einer externen Waschwasserzuleitung (46) aufweist.

12. Wischblattvorrichtung nach Anspruch 11, **dadurch gekennzeichnet, dass** die Schnellkuppelvorrichtung (44) zumindest einen Aufnahmekanal (48) zu einer Aufnahme einer externen Waschwasserzuleitung (46) eines Wischarms (14) eines Wischers (16) aufweist.

13. Wischblattvorrichtung nach Anspruch 12, **dadurch gekennzeichnet, dass** der Aufnahmekanal (48) zumindest eine Einführungsschräge (50) aufweist.

14. Wischblattvorrichtung nach Anspruch 12 oder 13, **dadurch gekennzeichnet, dass** bei einer Kupplung mittels der Schnellkuppelvorrichtung (44) der Aufnahmekanal (48) durch ein Dichtelement (52), insbesondere eine Dichtkante, der externen Waschwasserzuleitung (46) wasserdicht mit der externen Waschwasserzuleitung (46) verbindbar ist.

15. Wischblattvorrichtung nach einem der Ansprüche 12 bis 14, **dadurch gekennzeichnet, dass** die Adaptereinheit (12) den Wischarmadapter (38) zu einer Kopplung mit einem Wischarm (14) eines Wischers (16) aufweist, welcher eine Clips-Verbindung zu einer Verbindung mit dem Wischarm (14) umfasst, wobei die Clips-Verbindung dazu vorgesehen ist, eine Einführtiefe für eine externe Waschwasserzuleitung (46) des Wischarms (14) in den Aufnahmekanal (48) vorzugeben.

16. Wischer (16), insbesondere Scheibenwischer, mit einer Wischblattvorrichtung nach einem der vorhergehenden Ansprüche.

## Claims

1. Wiper blade device, in particular a wiper blade device for a windscreen wiper, having at least one wiper blade (10), having at least one adapter unit (12) for coupling the wiper blade (10) to a wiper arm (14) of a wiper (16), in particular windscreen wiper, wherein the adapter unit (12) has a wiper arm adapter (38) and a wiper blade adapter (58), having at least one spray unit (18) which is integrated in the wiper blade (10), and having at least one washing water distributor unit (20) for supplying washing water to the spray unit (18), in particular to nozzle elements (22) of the spray unit (18) which are arranged at least substantially parallel with a main extent direction (54) of the wiper blade (10) along the wiper blade (10), wherein the washing water distributor unit (20) has at least one channel coupling element (24) for a preferably fluid-tight coupling of at least one component of the washing water distributor unit (20) to a washing water channel (26) of the spray unit (18), which coupling is provided in particular for a passage of a fluid, and wherein the washing water distributor unit (20) has at least one adapter coupling element (28) for a preferably fluid-tight coupling of at least one additional component of the washing water distributor unit (20) to an additional washing water channel (30) of the adapter unit (12), which coupling is provided in particular for a passage of a fluid, wherein the additional washing water channel (30) is at least partially formed by the wiper arm adapter (38) of the adapter unit (12), **characterized in that** the adapter coupling element (28) has a locking device (86) for positioning the adapter coupling element (28) relative to the adapter unit (12), wherein at least one locking element (74) of the locking device (86) is provided for fixing the adapter coupling element (28) in the additional washing water channel (30) of the adapter unit (12), and wherein the locking element (74) is constructed as a locking hook.

2. Wiper blade device according to Claim 1, **characterized in that** the adapter unit (12) in a mounted state is connected to the wiper blade (10) at least substantially in a non-detachable manner, in particular at least substantially in a non-releasable manner.

3. Wiper blade device according to Claim 1 or Claim 2, **characterized in that** the washing water distributor unit (20) has a washing water supply line channel (32) which is formed integrally with the adapter unit (12), and which is arranged in an angled manner with respect to the additional washing water channel (30) of the adapter unit (12) .

4. Wiper blade device according to one of the preceding claims, **characterized in that** the channel coupling element (24) and the adapter coupling element (28) are connected by means of at least one at least partially flexible washing water line (34).

5. Wiper blade device according to Claim 4, **characterized in that** the adapter coupling element (28) is coupled to at least one additional flexible washing water line (36).

6. Wiper blade device according to one of the preceding claims, **characterized in that** the adapter coupling element (28) has a sealing element (88), in particular a sealing edge, to form a water-tight coupling at least with the additional washing water channel (30) of the adapter unit (12).

7. Wiper blade device according to one of the preceding claims, **characterized in that** the adapter unit (12) has the wiper arm adapter (38) for coupling to a wiper arm (14) of a wiper (16) which is connected to the adapter coupling element (28) in a rotationally secure manner.

8. Wiper blade device according to one of the preceding claims, **characterized in that** the adapter unit (12) has the wiper arm adapter (38) for coupling to a wiper arm (14) of a wiper (16), wherein the at least one channel coupling element (24) can be moved relative to the wiper arm adapter (38).

9. Wiper blade device according to Claim 5, **characterized in that** the channel coupling element (24), the adapter coupling element (28), the flexible washing water line (34), the additional flexible washing water line (36) and/or an additional channel coupling element (40) of the washing water distributor unit (20) are constructed as an integral washing water distributor element (42) of the washing water distributor unit (20).

10. Wiper blade device according to Claim 9, **characterized in that** the washing water distributor element (42) is constructed as a multi-coloured injection-moulded component.

11. Wiper blade device according to Claim 1, **characterized in that** the washing water distributor unit (20) has an, in particular hose-free, rapid coupling device (44) for a fluid-tight coupling of the washing water distributor unit (20) to an external washing water supply line (46).

12. Wiper blade device according to Claim 11, **characterized in that** the rapid coupling device (44) has at least one receiving channel (48) for receiving an external washing water supply line (46) of a wiper arm (14) of a wiper (16).

13. Wiper blade device according to Claim 12, **characterized in that** the receiving channel (48) has at least one inclined introduction member (50).

14. Wiper blade device according to Claim 12 or Claim 13, **characterized in that,** with a coupling by means of the rapid coupling device (44), the receiving channel (48) can be connected to the external washing water supply line (46) in a water-tight manner by means of a sealing element (52), in particular a sealing edge, of the external washing water supply line (46).

15. Wiper blade device according to one of Claims 12 to 14, **characterized in that** the adapter unit (12) has the wiper arm adapter (38) for coupling to a wiper arm (14) of a wiper (16), which wiper arm adapter comprises a clip-fit connection for connection to the wiper arm (14), wherein the clip-fit connection is provided to predetermine an introduction depth for an external washing water supply line (46) of the wiper arm (14) in the receiving channel (48).

16. Wiper (16), in particular windscreen wiper, having a wiper blade device according to one of the preceding claims.

## Revendications

1. Dispositif formant balai d'essuyage, en particulier dispositif formant balai d'essuyage pour un essuie-glace, comprenant au moins un balai d'essuyage (10), comprenant au moins une unité formant adaptateur (12) servant à un accouplement du balai d'essuyage (10) à un bras d'essuyage (14) d'un dispositif d'essuyage (16), en particulier d'un essuie-glace, l'unité formant adaptateur (12) présentant un adaptateur de bras d'essuyage (38) et un adaptateur de balai d'essuyage (58), comprenant au moins une unité de pulvérisation (18) intégrée dans le balai d'essuyage (10), et comprenant au moins une unité de distribution d'eau de lavage (20) servant à une alimentation en eau de lavage de l'unité de pulvérisation (18), en particulier d'éléments formant buses (22) de l'unité de pulvérisation (18), lesquels sont disposés au moins sensiblement parallèlement à une direction d'étendue principale (54) du balai d'essuyage (10) le long du balai d'essuyage (10), l'unité de distribution d'eau de lavage (20) présentant au moins un élément de raccordement de canal (24) servant à un raccordement, prévu en particulier pour un passage d'un fluide, de préférence étanche aux fluides, au moins d'une partie de l'unité de distribution d'eau de lavage (20) à un canal d'eau de lavage (26) de l'unité de pulvérisation (18), et l'unité de distribution d'eau de lavage (20) présentant au moins un élément de raccordement d'adaptateur (28) servant à un raccordement, prévu en particulier pour un passage d'un fluide, de préférence étanche aux fluides, au moins d'une autre partie de l'unité de distribution d'eau de lavage (20) à un autre canal d'eau de lavage (30) de l'unité formant adaptateur (12), l'autre canal d'eau de lavage (30) étant formé au moins partiellement par l'adaptateur de bras d'essuyage (38) de l'unité formant adaptateur (12), **caractérisé en ce que** l'élément de raccordement d'adaptateur (28) présente un dispositif de verrouillage (86) servant à un positionnement de l'élément de raccordement d'adaptateur (28) par rapport à l'unité formant adaptateur (12), au moins un élément d'encliquetage (74) du dispositif de verrouillage (86) étant prévu pour une fixation de l'élément de raccordement d'adaptateur (28) dans l'autre canal d'eau de lavage (30) de l'unité formant adaptateur (12), et l'élément d'encliquetage (74) étant réalisé sous forme de crochet d'encliquetage.

2. Dispositif formant balai d'essuyage selon la revendication 1, **caractérisé en ce que** l'unité formant adaptateur (12), dans un état monté, est reliée au moins sensiblement de manière imperdable, en particulier au moins sensiblement de manière inamovible, au balai d'essuyage (10).

3. Dispositif formant balai d'essuyage selon la revendication 1 ou 2, **caractérisé en ce que** l'unité de distribution d'eau de lavage (20) présente un canal d'amenée d'eau de lavage (32) formé d'une seule pièce avec l'unité formant adaptateur (12), lequel canal est disposé de manière inclinée par rapport à l'autre canal d'eau de lavage (30) de l'unité formant adaptateur (12).

4. Dispositif formant balai d'essuyage selon l'une des revendications précédentes, **caractérisé en ce que** l'élément de raccordement de canal (24) et l'élément de raccordement d'adaptateur (28) sont reliés par au moins une conduite d'eau de lavage (34) au moins partiellement souple.

5. Dispositif formant balai d'essuyage selon la revendication 4, **caractérisé en ce que** l'élément de raccordement d'adaptateur (28) est accouplé à au moins une autre conduite d'eau de lavage (36) souple.

6. Dispositif formant balai d'essuyage selon l'une des revendications précédentes, **caractérisé en ce que** l'élément de raccordement d'adaptateur (28) présente un élément d'étanchéité (88), en particulier une arête d'étanchéité, servant à un raccordement étanche à l'eau au moins à l'autre canal d'eau de lavage (30) de l'unité formant adaptateur (12).

7. Dispositif formant balai d'essuyage selon l'une des revendications précédentes, **caractérisé en ce que** l'unité formant adaptateur (12) présente l'adaptateur de bras d'essuyage (38) pour un accouplement à un bras d'essuyage (14) d'un dispositif d'essuyage (16), lequel adaptateur est relié de manière solidaire en rotation à l'élément de raccordement d'adaptateur (28).

8. Dispositif formant balai d'essuyage selon l'une des revendications précédentes, **caractérisé en ce que** l'unité formant adaptateur (12) présente l'adaptateur de bras d'essuyage (38) pour un accouplement à un bras d'essuyage (14) d'un dispositif d'essuyage (16), l'au moins un élément de raccordement de canal (24) étant mobile par rapport à l'adaptateur de bras d'essuyage (38).

9. Dispositif formant balai d'essuyage selon la revendication 5, **caractérisé en ce que** l'élément de raccordement de canal (24), l'élément de raccordement d'adaptateur (28), la conduite d'eau de lavage (34) souple, l'autre conduite d'eau de lavage (36) souple et/ou un autre élément de raccordement de canal (40) de l'unité de distribution d'eau de lavage (20) sont réalisés sous la forme d'un élément de distribution d'eau de lavage (42) d'une seule pièce de l'unité de distribution d'eau de lavage (20).

10. Dispositif formant balai d'essuyage selon la revendication 9, **caractérisé en ce que** l'élément de distribution d'eau de lavage (42) est réalisé sous la forme d'une pièce moulée par injection multicolore.

11. Dispositif formant balai d'essuyage selon la revendication 1, **caractérisé en ce que** l'unité de distribution d'eau de lavage (20) présente un dispositif de raccordement rapide (44), en particulier sans tuyau, pour un raccordement étanche aux fluides de l'unité de distribution d'eau de lavage (20) à une amenée d'eau de lavage (46) externe.

12. Dispositif formant balai d'essuyage selon la revendication 11, **caractérisé en ce que** le dispositif de raccordement rapide (44) présente au moins un canal de logement (48) pour un logement d'une amenée d'eau de lavage (46) externe d'un bras d'essuyage (14) d'un dispositif d'essuyage (16).

13. Dispositif formant balai d'essuyage selon la revendication 12, **caractérisé en ce que** le canal de logement (48) présente au moins un biseau d'insertion (50) .

14. Dispositif formant balai d'essuyage selon la revendication 12 ou 13, **caractérisé en ce que**, lors d'un raccordement au moyen du dispositif de raccordement rapide (44), le canal de logement (48) peut être relié de manière étanche à l'eau à l'amenée d'eau de lavage (46) externe par le biais d'un élément d'étanchéité (52), en particulier d'une arête d'étanchéité, de l'amenée d'eau de lavage (46) externe.

15. Dispositif formant balai d'essuyage selon l'une des revendications 12 à 14, **caractérisé en ce que** l'unité formant adaptateur (12) présente l'adaptateur de bras d'essuyage (38) pour un accouplement à un bras d'essuyage (14) d'un dispositif d'essuyage (16), lequel comprend une liaison par enclipsage pour une liaison au bras d'essuyage (14), la liaison par enclipsage étant prévue pour prédéfinir une profondeur d'insertion pour une amenée d'eau de lavage (46) externe du bras d'essuyage (14) dans le canal de logement (48).

16. Dispositif d'essuyage (16), en particulier essuie-glace, comprenant un dispositif formant balai d'essuyage selon l'une des revendications précédentes.
